# EUROPEAN PATENT APPLICATION

(11) **EP 3 150 062 A1**
(43) Date of publication of application: **05.04.2017**
(21) Application number: 15187728.9
(22) Date of filing: 30.09.2015
(51) Int. Cl.: A01G 13/00

(54) **REEL UNWINDER**

(71) Applicant: Trioplast France SAS, 49420 Pouance (FR)
(72) Inventor: CABARET, Damien, 49420 Pouancé (FR); GAUGAIN, Tony, 41110 SOUDAN (FR); HEAS, Fabrice, 44670 JULIEN DE VOUVANTES (FR); GAUCHET, Thierry, 49440 CANDE (FR)
(74) Representative: Awapatent AB

(57) **Abstract**

The present specification relates to a device for supporting at least a first and a second reel (R1, R2), such as a first and a second reel (R1, R2) comprising an agricultural film. The device (1) is adapted to be lifted by a vehicle and to enable unwinding of the reels (R1, R2). The device comprises means for rotatably supporting the first reel (R1) comprising a first bar (21) and means for rotatably supporting the second reel (R2) comprising a second bar (31), a supporting frame (10) comprising attachment means adapted to attach the frame (10) to the vehicle and means (20) for receiving the first bar (21) and coupling means (40) for supporting the second bar (31). The first bar (21) is adapted to extend through the hollow axis of said the reel and the second bar (31) is adapted to extend through the hollow axis of the second reel (R2) and the second bar (31) is movably arranged with respect to the supporting frame.

The present specification also relates to a kit and a method for providing agricultural film.

## Description

### Technical field

The present invention generally relates to the field of handling of reels comprising agricultural film and in particularly discloses a device for supporting, and enabling unwinding of, such reels, a kit comprising such a device and at least a first and a second reel as well as a use of such a device and a method for providing reels for agricultural film.

### Technical background

In the agricultural industry films, especially plastic films, are utilized for example for covering of crops in fields. Hereby crop growth may be enhanced, due to the films retaining heat and moist and thereby creating an advantageous environment for growth. The crops may also be protected for example from excessive sunlight or rain. Further the growth of weed may be suppressed thereby reducing the need for pesticides.

In order to better adapt the films to different applications, often two layers of film are utilized. In such applications, combinations of for example different material comprising various characteristics and different thicknesses of films may be combined to suit different applications.

One common way of handling double layers of plastic is the use of double layered film on a single reel. Such a reel offers convenience of handling. Drawbacks however include a more complex process of production and winding of the films on the reel, as well a less flexible product.

A more flexible solution is the use of devices adapted to support a first and a second reel, each reel comprising an agricultural film, or layer of film. Hereby, the production process is simplified and the flexibility is increased as compared to the case of using a double layered film. However, the reels are normally large and heavy and thus the arrangement of multiple reels on such devices tends to be less convenient for the user. Further, the process of arranging the reels on the device is potentially hazardous due to the size and weight of the reels.

### Summary of the invention

Accordingly, it would be desirable to provide an improved device for supporting such reels compared to the above described prior art. In particular, it would be advantageous to facilitate handling and transport of the reels. To better address one or more of these concerns, a device, a kit and a method for supporting at least a first and a second reel as defined in the independent claims are provided. Preferred embodiments are defined in the dependent claims.

According to a first aspect of the invention a device for supporting at least a first and a second reel, such as a first and a second reel comprising an agricultural film is provided. Each reel comprises a hollow axis. The device is adapted to be lifted by a vehicle and to enable unwinding of the reels. The device comprises means for rotatably supporting the first reel, the means comprising a first bar, extending along an axis A1, and means for rotatably supporting the second reel, the means comprising a second bar, extending along an axis A2, a supporting frame, the frame comprising attachment means adapted to attach the frame to the vehicle and means for receiving the first bar and coupling means for supporting said second bar. The first bar is adapted to extend through the hollow axis of said the reel and the second bar is adapted to extend through the hollow axis of the second reel, the axes A1 and A2 are arranged to extend substantially parallel, wherein the second bar is movably arranged with respect to the supporting frame.

According to the first aspect, the device provides an inventive solution to the concerns described above derived from the realization that the desired functionality may be provided by a design incorporating a supporting frame and a first and second reel, wherein the second bar is movably arranged. Hereby, i.e. by designing the device such that the second bar may be movably arranged, the device may be flexibly arranged in a plurality of positions allowing for example for an adaption of the device to different stages of utilization of the device, such as during arrangement of reels, during transport and storage and during unwinding of the reels on for example a field. Hence, handling of the device as well as handling of the reels may be significantly facilitated and simplified compared to what is known in the art. Accordingly, advantages of the invention include that a first and a second reel may be received and handled by the device in a simple manner and further that the device is flexible and easy to use.

The size of the supporting frame, as well as the length of the first and the second bar respectively, may be chosen according to the size of the reels intended to be used with the device. Suitable materials for the comprised components include metal, for example steel.

The supporting frame may comprise a first elongated member extending substantially parallel to the first and second bar, and a first and second arm extending substantially perpendicular to the elongated member. Hereby, the supporting frame may in some embodiments be described as comprising a U-shaped structure.

In some embodiment, the U-shaped structure may, in use for example arranged on a vehicle, be arranged in a substantially horizontal plane.

In some embodiment, the U-shaped structure may, in use for example arranged on a vehicle, be arranged in a substantially vertical plane.

In some embodiments the first bar may be received by the first and second arm, the first and second arm may comprise suitable receiving means. Hereby, in one embodiment, the first bar may be arranged in a plane defined by the elongated member and at least one of the arms.

In some embodiments, the second bar is further movably arranged with respect to the first bar. In some embodiment, the first bar may be movably arranged with respect to the supporting frame.

In one embodiment, the attachment means adapted to attach the supporting frame to the vehicle are arranged on a first side of the supporting frame and/or the elongated member. In one embodiment, the means for receiving the first bar are arranged on the first side of the supporting frame and/or the elongated member, in other embodiments the means for receiving the first bar are arranged on a second side of the supporting frame and/or the elongated member. In some embodiments, the second side is an opposite side with respect to the first side.

According to one embodiment, the device may be arranged in at least a first position wherein the second bar is arranged on a first side of the supporting frame and at least a second position wherein the second bar is arranged on a second side of the supporting frame. I.e. the second bar may be movably arranged such that it may be moved with respect to the supporting frame.

In one embodiment, the second side is a second opposite side.

In one embodiment, the first side of the frame may be described as a lateral side of the frame, when in use, i.e. a laterally offset position with respect to the supporting frame. In one embodiment, the second side of the frame may be described as a side aligned with the frame.

In one embodiment, the first side is a side such that the second reel is offset with respect to the supporting frame and/or an elongated member of the supporting frame at least along an axis B perpendicular to an axis along the elongated member of the supporting frame and to an axis along a direction of extension of at least one of the arms of the supporting frame.

In one embodiment, the second side is a side such that the second reel is substantially aligned to the supporting frame and/or the elongated member of the supporting frame with respect to a direction along the axis B defined above, i.e. the reel and the supporting frame and/or the elongated member are arranged at a common position along the axis B.

In one embodiment, the second side is a side such that the supporting frame and/or an elongated member of the supporting frame, the first bar and the second bar are substantially aligned.

In one embodiment, the first side of the frame may be described as a side above the frame, when in use for example when arranged on a vehicle. In one embodiment, the second side of the frame may be described as a side below the frame, when in use for example when arranged on a vehicle.

In more general terms, a side of the frame may be understood as any side, or face of the frame, such as the tope side, the bottom side or any of the sides connecting the upper and lower side of the frame. With respect to a embodiment of the supporting frame comprising a first elongated member extending substantially parallel to the first and second bar, and a first and second arm extending substantially perpendicular to the elongated member, a side may be described for example as a side defined by the upper surfaces of the elongated member and the arms, a side defined by the lower surfaces of the elongated member and the arms, a side defined by the side surface of the respective arms or a side defined by the side surface of the elongated member.

In one embodiment, the device may be arranged in at least a first position wherein the first bar is arranged on a first side of the supporting frame and at least a second position wherein the first bar is arranged on a second side of the supporting frame.

In one embodiment, the device may be arranged in at least a first position wherein the second bar is arranged on a first side of the first bar and at least a second position wherein the second bar is arranged on a second side of the first bar. I.e. the second bar may be movably arranged such that it may be moved with respect to the first bar.

In one embodiment, the device may be arranged in at least a first position wherein the second bar is arranged at first distance from the attachment means adapted to attach the frame to a vehicle and at least a second position wherein the second bar is arranged at second distance from the attachment means adapted to attach the frame.

In one embodiment, in the first position, the second bar may be described as being arranged on top of, or above, the frame and the first bar. In the second position, the second bar may be described as being arranged underneath, or below the frame.

According to one embodiment, the second bar is adapted to be pivotally arranged around an axis P of the device by means of said coupling means. In one embodiment, the second bar may pivot, or move along a path describing a substantially circular arc, with respect to an axis P of the device P. Such an embodiment is advantageous for example in that a defined path may be utilized, hereby facilitating the movement of the second bar for a user. The path may in some embodiments be adapted to the size of the first reel and/or to accommodate, or describe a possible path, or movement, inside which path the first reel may be arranged.

In one embodiment, the radius of the path defined by the pivotal movement of the second bar, is equal to or larger than the initial, or maximum, diameter of the first reel when arranged on the device.

In one embodiment, the radius of the path defined by the pivotal movement of the second bar, is substantially equal to or larger than the initial, or maximum, radius of the first reel when arranged on the device.

In one embodiment, the radius of the path defined by the pivotal movement of the second bar is a fixed radius. In other embodiments, the radius of the path defined by the pivotal movement of the second bar, is a variable radius

With respect to the orientation of the axis P, the axis P may in some embodiments be an axis substantially parallel to the second bar. In some embodiments, the axis P is substantially parallel to a longer edge of the supporting frame of the device. In some embodiments, the axis P is substantially perpendicular to a direction of unwinding, i.e. the direction in which the plastic films are extending when unwinded from the reels.

According to one embodiment, the axis P around which the second bar is pivotally arranged substantially coincides with the axis of rotation of the first bar. In other words, the second bar may be pivotally arranged with respect to the first bar. This is advantageous for example in that common point/points for receiving, or supporting, the first and second bar may be arranged on the supporting frame. In one embodiment, the means for receiving the first bar may be further utilized for receiving the second bar.

In one embodiment, the common point/points for receiving, or supporting, the first and second bar is a point not comprised by the axis P. I.e. the axis P, coinciding with the axis of rotation of the first bar, may be an axis arranged at a distance from the supporting frame.

According to one embodiment the coupling means are adapted to couple said second bar to said supporting frame. Such embodiments may for example include embodiments wherein the second bar is pivotably arranged with respect to the supporting frame. The coupling means and/or the second bar and/or the supporting frame may comprise suitable means for connecting the coupling means to the supporting frame. Examples include a nut and bolt connection, or a joint such as a hinge joint or a rotatable joint.

According to one embodiment, the coupling means are adapted to couple said second bar to said first bar. Such embodiments may for example include embodiments wherein the second bar is pivotably arranged with respect to the first bar. The coupling means and/or the second bar and/or the first bar may comprise suitable means for connecting the coupling means to the supporting frame. Examples include a nut and bolt connection, or a joint such as a hinge joint or a rotatable joint.

According to one embodiment, the first bar, in at least one position, is adapted to be suspended from the frame. In such an embodiment, the supporting frame and/or the first bar comprise suitable attachment, or coupling means, in order to allow the first bar to be suspended. In one embodiment, the attachment or coupling means are substantially the same as, or similar to, the coupling means arranged to support the second bar. In one embodiment, the wording "suspended from" is to be interpreted as an arrangement wherein the first bar in the second position is suspended below the supporting frame in a vertical direction.

In one embodiment, said at least one position is a position of the device as arranged when the device is in use, i.e. when the device is lifted by the vehicle to enable unwinding of the reels.

According to one embodiment, the second bar, in at least one position, is adapted to be suspended from the supporting frame. In such an embodiment, the supporting frame and/or the second bar comprise suitable attachment, or coupling means, in order to allow the second bar to be suspended. In one embodiment, the wording "suspended from" is to be interpreted as an arrangement wherein the second bar in the at least one position is suspended below the supporting frame in a vertical direction.

In one embodiment the first and the second bar are adapted to be suspended from substantially the same point(s) of the supporting frame.

In one embodiment, the at least one position is a position of the device as arranged when the device is in use, i.e. when the device is lifted by the vehicle to enable unwinding of the reels.

According to one embodiment, the second bar, in at least one position, is adapted to be suspended from the first bar. In such an embodiment, the first bar and/or the second bar comprise suitable attachment, or coupling means, in order to allow the second bar to be suspended. In one embodiment, the wording "suspended from" is to be interpreted as an arrangement wherein the second bar in the at least one position is suspended below the first bar in a vertical direction.

In one embodiment, the second bar, in the at least one position, is adapted to be suspended from the first bar whereas the first bar is suspended from the supporting frame. I.e. the supporting frame, the first bar and the second bar may be vertically arranged in a successive order from highest to lowest.

In one embodiment, the at least one position is a position of the device as arranged when the device is in use, i.e. when the device is lifted by the vehicle to enable unwinding of the reels.

According to one embodiment, the coupling means comprise a first coupling element extending between the first end of the first bar and the first end of the second bar, and a second coupling element extending between the second end of the first bar and the second end of the second bar. Such an embodiment is advantageous in that it provides for enhanced stability to the device by providing two coupling elements. The coupling elements may comprise suitable means for connecting the coupling elements to the supporting frame and/or the second bar. Examples include a nut and bolt connection, or a joint such as a hinge joint or a rotatable joint.

In one embodiment, the first and second coupling element is a first and a second arm, or bar.

In one embodiment, the coupling means comprise a first coupling element extending between the supporting frame and the first end of the second bar, and a second coupling element extending between the supporting frame and the second end of the second bar.

In one embodiment, the coupling means comprise a first coupling element extending from a first end of the second bar, and a second coupling element extending from a second end of the second bar.

In some embodiments, the coupling means may comprise more than two coupling elements.

According to one embodiment, the coupling means are substantially rigid. Such an embodiment is advantageous in that it provides a stable, form arrangement of the second bar. Examples include at least one arm, at least one bar or at least one link.

According to one embodiment, the coupling means are flexible. Such an embodiment is advantageous in that it provides a flexible, versatile arrangement of the second bar. In some embodiments, the flexible coupling means may comprise coupling means wherein the length of the coupling means is adjustable.

According to one embodiment, the coupling means comprise a chain. Such a chain may comprise any suitable number of links, and is therefore advantageous especially in terms of flexibility.

In one embodiment, the coupling means comprise a metal sling.

According to one embodiment, the device is adapted to be arranged in a first position, wherein the first position is a position suitable for storage and/or transport. Due to the movable arrangement of the second bar, the device, e.g. the second bar, may be arranged such that the space required for the device is reduced. In one embodiment, the second bar may be arranged on a first side of the supporting frame such that the frame may be arranged on a pallet for storage and/or transportation. In such an embodiment, the frame may be arranged to rest on a pallet, whereas the second bar is arranged on the opposite side of the frame with respect to the pallet. In one embodiment, the first bar may be arranged on the same opposite side of the frame when arranged in the first position.

In one embodiment, in such a first position, the first and the second reel, and hence the first and second bar, may be arranged to rest on a surface, such as a pallet, whereas the frame may be adapted to be arranged above, or on top of, the first and second bar. In other words, the first and second bar, and hence the reels, may be arranged such that the pallet and the supporting frame are arranged on opposite sides of the first and second bars.

According to one embodiment, the device is adapted to be arranged in a second position, wherein the second position is a position suitable for unwinding of the reels. Due to the movable arrangement of the second bar, the device, e.g. the second bar, may be arranged such that the unwinding of the reels and therefore the arrangement of the film of the reels is facilitated. In one embodiment, the second bar may be arranged on a second side of the supporting frame such that the frame may be arranged supported, or lifted, by a vehicle. In such an embodiment, the frame may be arranged to be lifted by the vehicle, whereas the second bar may be arranged below, i.e. suspended, by the frame. In one embodiment, the first bar may also be arranged to be suspended by the frame when arranged in the second position.

In one embodiment the first bar may be arranged at substantially the same level as the frame, with respect to a vertical axis, when arranged in the second position.

According to one embodiment, the attachment means adapted to removably attach the frame to the vehicle comprises means for receiving the forks of a forklift. Forklifts are commonly utilized in the industry for handling reels and/or pallet. Further, the distance between fork legs of forklifts are commonly standardized, i.e. the supporting frame may advantageously be designed to fit such standardized dimensions.

In some embodiment, the attachment means are adapted to attach the frame to other types of vehicles such as trucks, tractors and the like.

In some embodiment, the attachment means may further comprise an adapter to facilitate attachment of the frame to different types of vehicles.

According to a second aspect of the invention a kit for providing reels for agricultural film is provided. The kit comprises a device according to any of the embodiment described above, a first reel, and second reel. The first and the second reel are arranged supported by said device. Accordingly, at least two reels of plastic film are provided to a user in an efficient and convenient manner wherein the need for heavy hazardous lifting is considerably reduced.

According to one embodiment of the second aspect of the invention, a kit further comprising a pallet is provided, wherein said device supporting said first and second reel is adapted to be arranged on said pallet. The kit further comprising a pallet may be provided, or delivered, to a user as a complete unit, and is therefore convenient to handle for example during transport and storage, as well as during use as described above.

Objectives, advantages and features of the kit conceivable within the scope of the second aspect of the invention are readily understood by the foregoing discussion referring to the first aspect of the invention.

According to a third aspect of the invention, a method for providing reels for agricultural film is provided. The method comprises the steps of providing a device according to any of the embodiment described in the preceding paragraphs, arranging a first reel on the first bar, arranging a second reel on the second bar, and arranging the device, including said first and second reel, on a pallet.

Objectives, advantages and features of the method conceivable within the scope of the third aspect of the invention are readily understood by the foregoing discussions referring to the first and the second aspect of the invention.

According to a fourth aspect of the invention, use of a device according to any of the embodiments described for supporting at least a first and a second reel or of a kit for providing reels for agricultural film is provided.

Objectives, advantages and features of the use conceivable within the scope of the fourth aspect of the invention are readily understood by the foregoing discussions referring to the first and the second aspect of the invention.

According to a fifth aspect of the invention, use of a device according to any of the embodiments described above for applying agricultural film to a field is provided.

Objectives, advantages and features of the use conceivable within the scope of the fifth aspect of the invention are readily understood by the foregoing discussions referring to the first and the second aspect of the invention.

Further objectives of, features of and advantages with the present invention will become apparent when studying the following detailed disclosure, the drawings and the appended claims. Those skilled in the art realize that different features of the present invention can be combined to create embodiments other than those described in the following.

### Brief description of the drawings

The invention will be better understood through the following illustrative and non-limiting detailed description of preferred embodiments, with reference to the appended drawing, on which:
Figure 1 is a perspective view of a device according to an embodiment of the invention;
Figure 2 is a top view of a device according to an embodiment of the invention;
Figure 3 is a side view of a device according to an embodiment of the invention;
Figure 4 is a perspective view of a device according to an embodiment of the invention, arranged supported by a vehicle;
Figure 5 is a perspective view of a device according to an embodiment of the invention, when supported by a vehicle;
Figure 6 is a perspective view of a device according to an embodiment of the invention;

All figures are schematic, not necessarily to scale, and generally only show parts which are necessary in order to elucidate the invention, wherein other parts may be omitted or merely suggested.

### Detailed description of embodiments

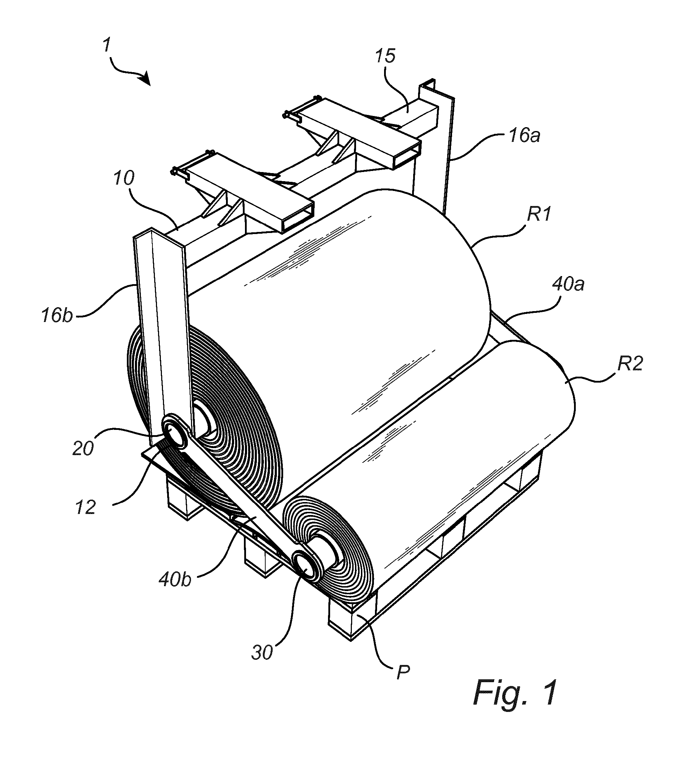

A device 1 for supporting a first reel R1 and a second reel R2 according to an embodiment of the invention is shown in a perspective view in fig 1. The device shown in fig. 1 is arranged on a pallet P. The device is in fig. 1 shown in a position suitable for example for storage, or transportation, wherein the second reel is arranged on an first laterally offset side with respect to the frame, and the first and the second reel are arranged supported by the pallet .

The device 1 comprises a supporting frame 10, means 20 for rotatably supporting the first reel R1, means 30 for rotatably supporting the second reel R2 and coupling means 40 adapted to support the second reel. The means 20, and hence the first reel R1, is in the illustrated case arranged in a fixed manner with respect to the frame 10, whereas the means 30 and hence the second reel R2 is movably arranged with respect to the supporting frame 10.

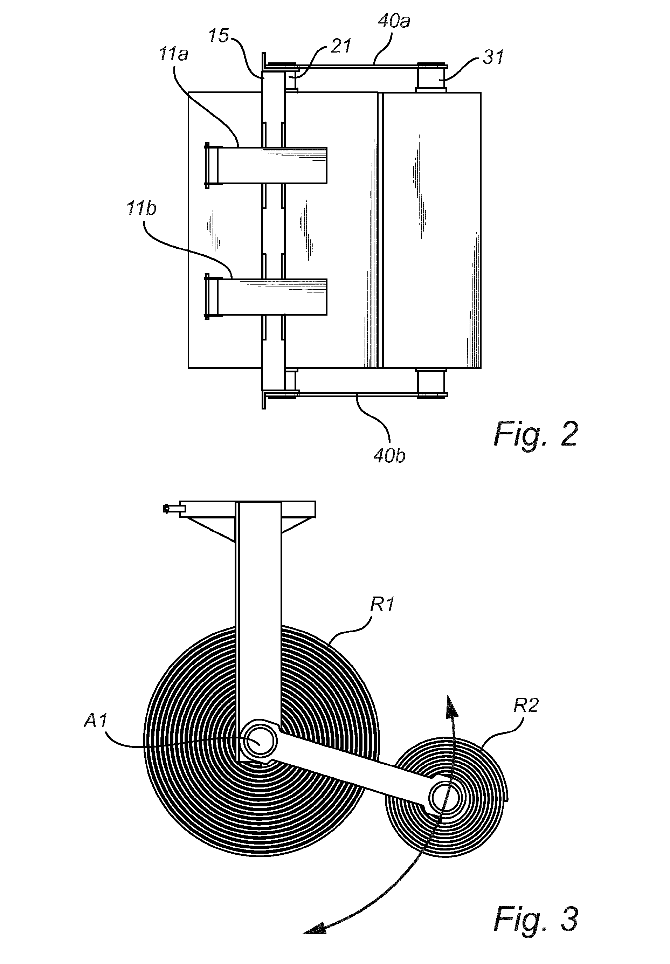

Fig. 2 is a top view of the embodiment of fig. 1 showing the means 20, 30 for supporting the first and second reel R1, R2. The means 20 for supporting the first reel R1 comprise a first bar 21, whereas the means 30 for supporting the second reel R2 comprise a second bar 31. The first and second bars 21, 31 extend substantially parallel. Further, the first and second bar 21, 31 extend substantially parallel to a direction of extension of the supporting frame 10.

Further, the coupling means 40 as shown in fig. 2 comprise a first and a second coupling element 40a, 40b. The coupling elements 40a, 40b extend between the second bar 31 and the supporting frame 10. Further, suitable rotational joints 22 are arranged at respective ends of the first and second coupling elements 40a, 40b such that the second bar 31 is rotatably supported.

The structure of the supporting frame 10 is shown in figures 1 and 2 comprising an elongated member 15 and a first and a second arm 16a, 16b and means 12 for receiving the first bar. The elongated member 15 extends in a first direction, when arranged on a vehicle in a horizontal direction, whereas the first and second arms 16a, 16b extend in a second direction, when arrange on a vehicle in a vertical direction. The supporting frame further comprises attachment means 11 adapted to attach the frame to a vehicle, the attachment means being arranged on the elongated member 15. In the illustrated case, the attachment means are adapted to be attached to, or lifted by, a fork lift. Therefore, means for receiving the respective fork legs, a first box shaped structure 11 a and a second box shaped structure 11b are arranged on the frame.

In the illustrated embodiment, the first and second arm 16a, 16b extend in a direction substantially perpendicular to the direction in which the box shaped structures are intended to receive the fort legs. Further, the first and second arm 16a, 16b extend substantially perpendicular to the elongated member 15.

Fig. 1 shows the device 1 in a position suitable for transport, or storage, wherein the second the second bar is arranged on a first side of the supporting frame such that the frame may for example be conveniently arranged on a pallet P as shown in fig. 1, wherein the first and the second reel R1, R2 rest, or are supported by, the pallet. The supporting frame 10 is arranged above the first reel R1, i.e. on an opposite side of the first reel R1 as compared to the pallet P.

Operation of the present embodiment of the device will now be described with reference to fig. 3. Fig. 3 is a side view of the device 1, and the first reel R1 and the second reel R2. The first bar 21 is arranged in a fixed position with respect to the frame 10 by means of the first and second arms 16a, 16b. The reel R1, comprising a hollow axis, is supported by the first bar and rotatably arranged with respect to the axis A1 of the first bar 21. The second reel R2 is movably arranged with respect to the supporting frame 10 by means of the second bar 31 extending along an axis A2. Further, the reel R2 is rotatably arranged with respect to the axis A2.

As shown in fig. 3, the movable arrangement of the second bar 31, and hence the second reel R2, is an arrangement wherein the first bar is pivotally arranged with respect to the supporting frame 10 by means of the coupling elements 40a, 40b. The axis around which the second bar 31 is pivotally arranged in the illustrated case coincides with the axis A1 of the first bar 21. Accordingly, the second bar 31 may be pivoted, or swung, between a first position wherein the second bar 31 is arranged on a first side of the frame 10 and the first bar, and hence the first reel R1, and a second position wherein the second bar 31 is arranged on a second side of the frame 10 and the first bar, and first reel R1. This movement is indicated by the arrow. The first side may for example be a laterally offset side, such as the position in which the embodiment of the device is depicted in fig. 3. The second side may be a lower side, or a side below the frame and/or the attachment means 11. In such a position the attachment means 11, the first bar and the second bar may be substantially aligned.

In the illustrated case, the second reel may be described as arranged below the frame 10 in both the first and the second position. However, the first position is a position wherein the second reel is laterally displaced, or offset, with respect to the frame 10 and more particularly to the first and second arm 16a, 16b. In the second position however, the second reel is arranged below the frame, with substantially no offset with regards to the lateral position of the first and second arm 16a, 16b. I.e. the supporting frame and/or the first and second arms 16a, 16b, the first reel R1 and the second reel R2 are substantially aligned, when viewed from the side.

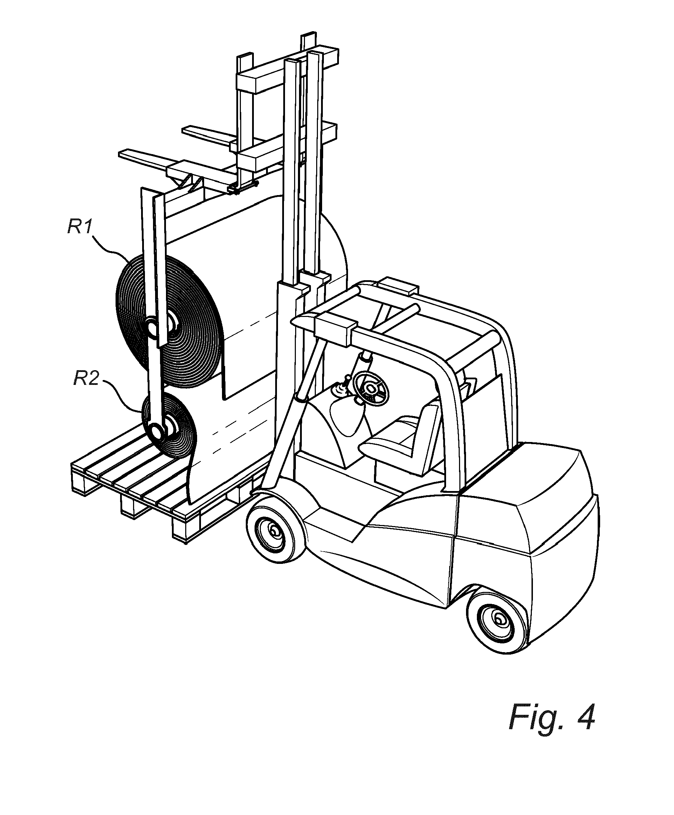

Fig. 4 shows the device 1 in a position suitable for unwinding of the reels, in fig. 4 the device is lifted by a fork lift. The forklift hereby supports, or lifts, the supporting frame 10, utilizing the box shaped support structures 11 a, 11 b. The first reel R1 is supported by the frame at substantially the same vertical level as the frame whereas the second reel R2 is arranged, or suspended, below the frame. The elongated member 15 of the supporting frame, the first reel R1 and the second reel R2 are substantially aligned. Hereby, the first and second plastic film comprised by the first and second reels R1, R2 respectively may be unwinded to form a double layer plastic film covering.

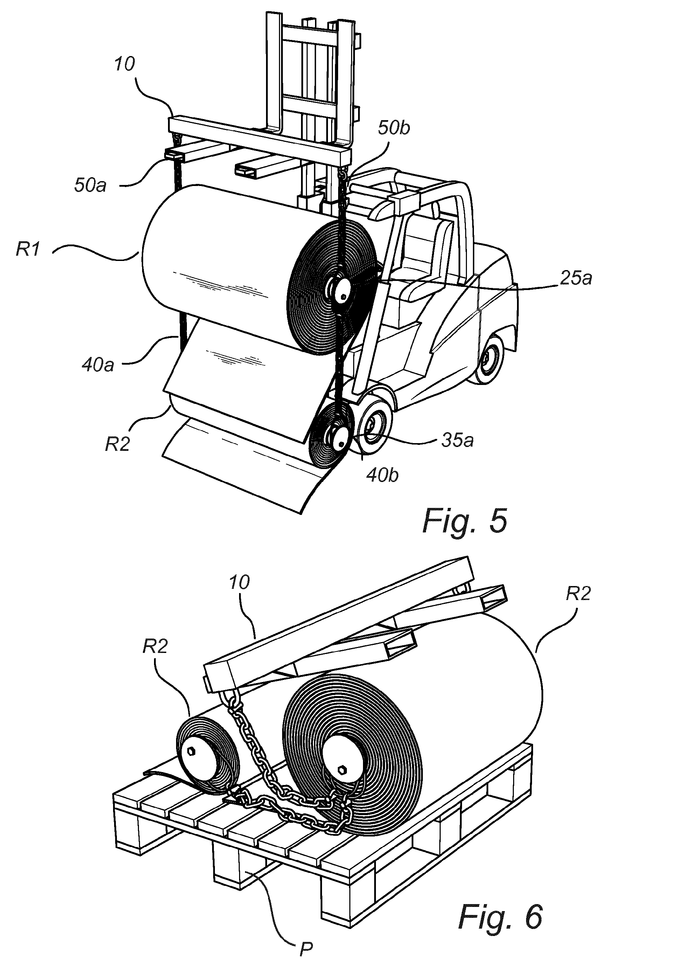

Fig. 5 shows another embodiment of the device 1 of the invention in a perspective view when lifted by a vehicle. The device 1 comprises a supporting frame 10, means 20 for rotatably supporting the first reel R1, means 30 for rotatably supporting the second reel R2 and coupling means 40 adapted to support the second reel. The device 1 of the illustrated embodiment further comprises second coupling means 50 adapted to support the first reel, the second coupling means extending between said first reel and said supporting frame.

The device 1 shown in figure 5 is shown arranged attached, or support by, a fork lift FL. Further, the device is shown in a position suitable for unwinding of the reels. The forklift hereby supports, or lifts, the supporting frame 10 and first reek R1 and the second reel R2 are successively suspended below the frame.

The means 20, 30 for supporting the first and second reel R1, R2 comprise a first bar 21 and a second bar 31. The first and second bars 21, 31 extend substantially parallel according to what has been described in connection with the first embodiment of the device above.

Further, the first and second bar comprise end pieces 25a, b and 35 a, b. The illustrated end pieces comprise a circular shape. Hereby the respective coupling means 40, 50 may be secured to the first and second bar 21, 31 respectively.

The coupling means 40, 50 as shown in fig. 5, comprise a first and a second coupling element 40a, 40b; 50a, 50b, respectively. The coupling elements 40a, 40b extend between the second bar 31 and the first bar 21 whereas the coupling elements 50a, 50b extend between the first bar 21 and the supporting frame 10. In the illustrated case, the coupling means 40, 50 are flexible coupling means in the form of chains. Further, suitable arrangement for connecting the chains 40, 50 to the respective bars 21, 31 in order to provide for the first and second bar 21, 31 to be rotatably supported are arranged at the respective ends of the first and second bar 21, 31. Such means may comprise rotational joints, wherein simple examples include sleeves or bushings. In some embodiments, the means may form an integral part of the end pieces described above.

Fig. 6 is a view of the second embodiment of the device of the invention shown in a position suitable for when the device 1 is arranged on a pallet P, for example during storage or transport. In the illustrated position, the first and second bars are shown arranged on the pallet, and the supporting frame 10 is arranged on top of the first and second reel. However, the skilled person realizes that the first and/or the second bar 31 may easily be arranged on either side of the supporting frame when arranged for example for storage, such as for example such as a side of the frame 10 not directly facing the pallet.

While specific embodiments have been described, the skilled person will understand that many modifications, variations and alterations are conceivable within the scope as defined in the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Device for supporting at least a first and a second reel, such as a first and a second reel comprising an agricultural film, each reel comprising a hollow axis, said device being adapted to be lifted by a vehicle and to enable unwinding of the reels, said device comprising
means for rotatably supporting said first reel, said means comprising a first bar, extending along an axis A1,
means for rotatably supporting said second reel, said means comprising a second bar, extending along an axis A2,
a supporting frame, said frame comprising attachment means adapted to removably attach said frame to said vehicle and means for receiving said first bar; and
coupling means for supporting said second bar;
wherein said first bar is adapted to extend through the hollow axis of said first reel and said second bar is adapted to extend through the hollow axis of said second reel, wherein said axes A1 and A2 are arranged to extend substantially parallel, and wherein said second bar is movably arranged with respect to the supporting frame.

2. Device according to claim 1, wherein said device may be arranged in at least a first position wherein the second bar is arranged on a first side of said supporting frame and at least a second position wherein the second bar is arranged on a second side of the supporting frame.

3. Device according to any of the preceding claims, wherein said second bar is adapted to be pivotally arranged around an axis P of the device by means of said coupling means.

4. Device according to claim 3, wherein the axis P around which the second bar is pivotally arranged substantially coincides with the axis of rotation of the first bar.

5. Device according to any of the preceding claims, wherein said coupling means are adapted to couple said second bar to said supporting frame.

6. Device according to any of the preceding claims 1-4, wherein said coupling means are adapted to couple said second bar to said first bar.

7. Device according to any of the preceding claims 2-6, wherein said first bar, in said second position, is adapted to be suspended from said frame.

8. Device according to any of the preceding claims 2-7, wherein said second bar, in said second position, is adapted to be suspended from said frame.

9. Device according to any of the preceding claims 2-7, wherein said second bar, in said second position, is adapted to be suspended from said first bar.

10. Device according to any of the preceding claims, wherein said coupling means comprise a first coupling element extending between said first end of said first bar and said first end of said second bar, and a second coupling element extending between said second end of said first bar and said second end of said second bar.

11. Device according to any of the preceding claims, wherein said coupling means are substantially rigid.

12. Device according to any of the preceding claims, wherein said coupling means are flexible

13. Device according to claim 12, wherein said coupling means comprise a chain.

14. Device according to any of the preceding claims, wherein said device may be arranged in a first position suitable for storage and/or transport.

15. Device according to any of the preceding claims, wherein said device may be arranged in a second position suitable for unwinding of the reels.

16. A device according to any of the preceding claims, wherein said attachment means adapted to removably attach said frame to said vehicle comprises means for receiving the forks of a forklift.

17. A kit for providing reels for agricultural film, said kit comprising
a device according to any of the preceding claims,
a first reel, and
a second reel,
wherein said first and second reel are arranged supported by said device.

18. A kit according to claim 16, said kit further comprising a pallet, wherein said device supporting said first and second reel is adapted to be arranged on said pallet.

19. Method for providing reels for agricultural film, the method comprising the following steps:
providing a device according to any of the preceding claims 1-16,
arranging a first reel on said first bar,
arranging a second reel on said second bar, and
arranging said device, including said first and second reel, on a pallet.
